# EUROPEAN PATENT APPLICATION

(11) **EP 1 883 043 A1**
(43) Date of publication of application: **30.01.2008**
(21) Application number: 07110501.9
(22) Date of filing: 18.06.2007
(51) Int. Cl.: G06Q 10/00

(54) **Administrator defined mandatory compliance expression**

(30) Priority: 19.07.2006 US 490225
(71) Applicant: Novell, Inc., Provo, UT 84606-6194 (US)
(72) Inventor: Buss, Duane, West Mountain, UT 84651 (US); Harrison, Roger, South Jordan, UT 84095 (US)
(74) Representative: Hanna, Peter William Derek

(57) **Abstract**

A system for conforming a decision (270) to a compliance expression (250) is described. In one embodiment, the system comprises receiving an intermediate conclusion (170) generated by a decision system as a result of a policy evaluation (140) performed based on at least one of a premise (160) and a policy expression (150); performing a compliance evaluation (230) to determine conformance of the received intermediate conclusion with a compliance expression; responsive to the performing a compliance evaluation, selectively executing a compliance statement (260) in connection with the intermediate conclusion; and subsequent to the selectively executing, issuing a decision response (270), wherein the decision response conforms to the compliance expression (250).

## Description

### BACKGROUND

Compliance has become a boardroom issue for almost all businesses. The auditing scandals of 2000 and 2001 in the U.S. and their repercussions across the globe have served as a catalyst for increased business transparency and accountability. As a result, numerous acts and legislative regimes have been introduced all over the world to ensure companies protect the interests of their stakeholders, partners and customers.

Most regulatory legislation, such as the Sarbanes-Oxley Act in the U.S. and similar controls in Europe, now demands that senior executives guarantee the accuracy of all financial reporting. In addition, companies are required to have and demonstrate that they have increased control over their business applications and associated assets. All transactions and business activities must now be fully auditable, requiring a much higher level of visibility across the organization.

In general terms, regulatory legislation aims to establish best practices for transparent, accountable business activities. In so doing, it determines who should have access to sensitive data. It ensures the security of applications and business processes, and stipulates how changes to IT systems, processes and data must be controlled and documented. Finally, legislation commonly requires companies to provide clear audit trails for all business activities.

Many efforts have been expended trying to make regulatory compliance easier and more manageable, including the increased use of role- and identity-based systems. A role-based system is one in which identities and resources are managed by aggregating them into groups, or roles, based on job functions, physical location, legal controls, and other criteria. Role-based systems can be used to simplify access control as well as for administrative convenience.

An important aspect of role-based systems is that they allow implementation of the concept of "separation of duties." Separation of duties is considered valuable in deterring fraud, since fraud can occur if an opportunity exists for one actor to fulfill multiple job-related functions. Separation of duties requires that for particular sets of transactions, no single individual is allowed to execute all transactions within the set. For example, financial controls in business settings often require that the person who signs a check be different than the payee on the check and that neither of those parties be associated with the audit of the checking account.

Separation of duties can be either static or dynamic. Compliance with static separation requirements can be determined simply by the proper allocation of transactions to roles followed by assignment of individuals to those roles. Compliance with the separation of duties concept is evaluated in advance, at the time of role creation and assignment. Dynamic separation of duties is more complicated. Procedures for dynamic separation of duties are required when compliance with requirements can only be determined during system operation. This allows for more flexibility in operations at the cost of higher complexity. Consider again the example of the financial controls of a business. A static policy could require that no individual who can write a check would ever be able to receive a check, and vice versa. This policy would be too rigid for real-world use. An alternative dynamic policy would allow a person to both write and receive checks, so long as that person was never allowed to sign any checks to herself or audit checks that she had received. **SUMMARY**

In one embodiment, a method is provided for conforming a decision to a compliance expression is described. The method comprises receiving an intermediate conclusion generated by a decision system as a result of a policy evaluation performed based on at least one of a premise and a policy expression; performing a compliance evaluation to determine conformance of the received intermediate conclusion with a compliance expression; responsive to the performing a compliance evaluation, selectively executing a compliance statement in connection with the intermediate conclusion; and subsequent to the selectively executing, issuing a decision response, wherein the decision response conforms to the compliance expression.

### BRIEF DESCRIPTION OF THE DRAWINGS

Fig. 1 is a block diagram of a decision system in which one or more of the embodiments described herein may be advantageously implemented.

Fig. 2 is a block diagram of a guaranteed-compliance decision system in accordance with one embodiment.

Figs. 3A-3C illustrate flow diagrams of exemplary embodiments of chained compliance systems.

### DETAILED DESCRIPTION

One embodiment includes a method for handling decision requests while ensuring conformance with one or more compliance expressions. To better illustrate the advantages and features of the invention, a particular description of several embodiments will be provided with reference to the attached drawings. These drawings, and other embodiments described herein, only illustrate selected aspects of the invention and do not limit the invention's scope. Further, despite reference to specific features illustrated in the example embodiments, it will nevertheless be understood that these features are not essential to all embodiments and no limitation of the scope of the invention is thereby intended. Possible alterations, modifications, and applications of the principles described herein, such as would occur to one skilled in the art, have been omitted for clarity and brevity; nevertheless, it is understood that such alterations, modifications, and applications are contemplated. Furthermore, some items are shown in a simplified form, and inherently include components that are well known in the art. Further still, some items are illustrated as being in direct connection for the sake of simplicity. Despite the apparent direct connection, it is understood that such illustration does not preclude the existence of intermediate components not otherwise illustrated.

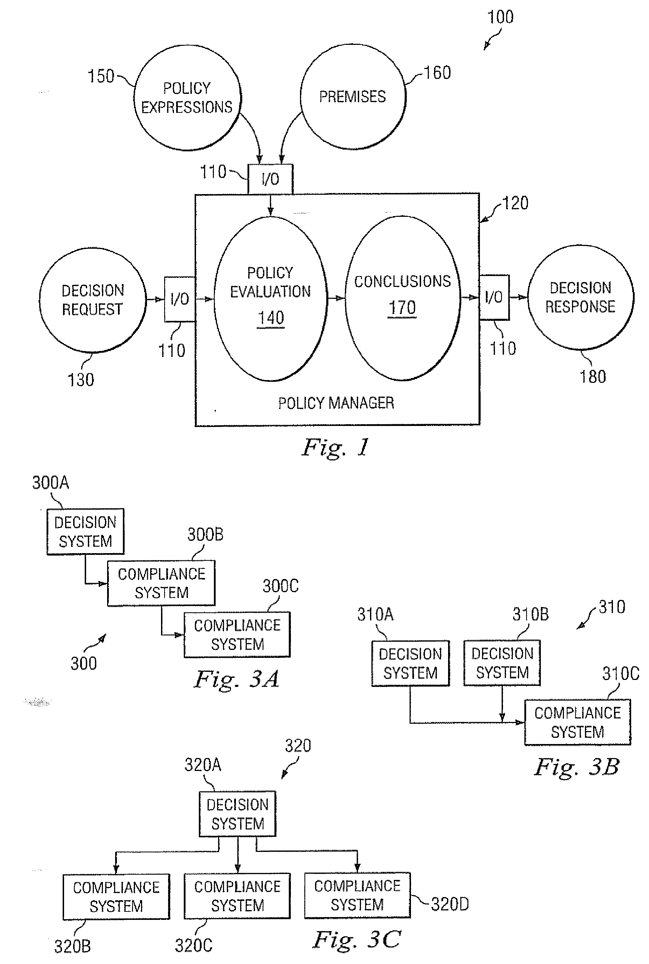

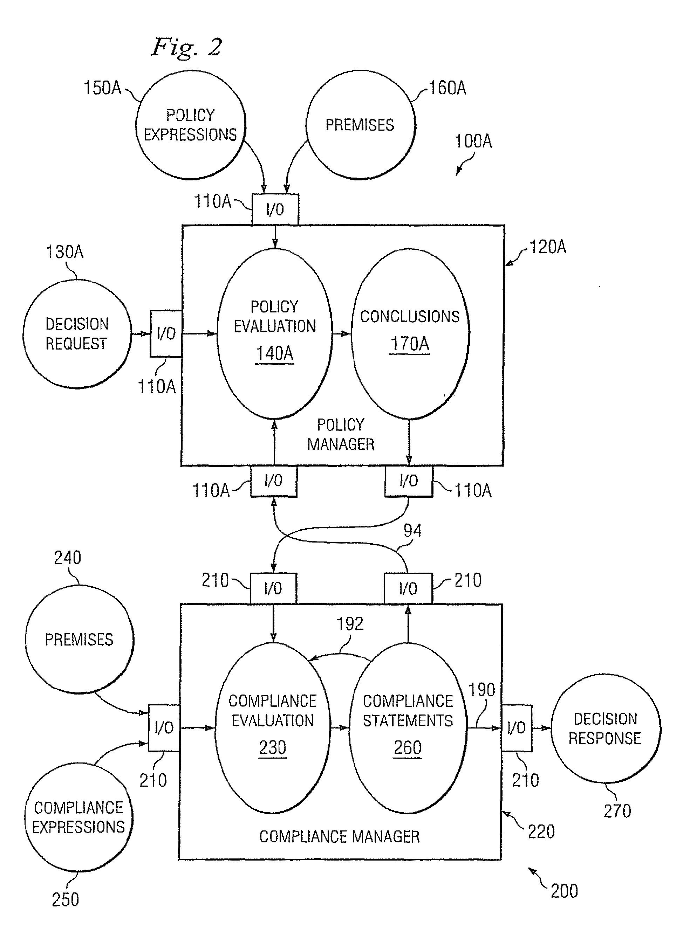

Fig. 1 is a block diagram of a Decision System 100 in which one or more of the embodiments described herein may be advantageously implemented. The Decision System 100 may comprise a single program or a collection of programs on a computer, a special- or general-purpose computer with computing hardware, or a dispersed system such as a cluster or other computers on a network. On a basic level, the Decision System 100 is responsible for allowing requests and data to flow into and out of the system that evaluates them. At a higher level, the Decision System 100 can be considered a unitary entity, a policy decision request apparatus.

To communicate a decision request, a response, and any other pertinent data into and out of the Decision System 100, the Decision System includes Input-Output (I/O) channels 110. These I/O channels 110 provide connections and protocols by which the components within the system can talk to each other and to other components outside the system. The given connections and communication protocols may be explicit or implicit, physical or solely logical.

In one embodiment, the I/O channels 110 enable communication to and from different parts of the system via the memory space in a computer. In another embodiment, communication into and out of the system takes the form of writing to or reading from disk, reading from or writing to a network socket, or interacting with a peripheral. In another embodiment, the different parts of the system 100 are implemented as special-purpose integrated circuits, the I/O channels 110 are defined by a series of buses going back and forth between the various components. Another example embodiment uses special- or general-purpose network protocols, such as TCP/IP, IPX/SPX, USB, IEEE 1394/Firewire, SCSI or Ethernet over IPC channels, wireless, wired, or optical links. In another embodiment, one or more of the I/O channels is "offline" or analog, such as a written communication within a business structure.

The Decision System 100 also comprises a Policy Manager 120. The Policy Manager 120 is responsible for the association of policy expressions with different requests, as will be described in more detail below, and the evaluation of policy constraints. It may also optionally be involved in policy actions. For example, such associations, evaluations, and actions could involve static or dynamic separation of duties requirements, logging or reporting requirements, role information lookups, cardinality checks, or other configurable conditions or actions to take place when implementing a system decision. Further, the Policy Manager 120 may delegate portions of its responsibilities as appropriate.

The Policy Manager 120 may be implemented in various ways, including, but not limited to, triggers or stored procedures in databases, decision trees, neural networks, rules engines, or compiled or interpreted code. Alternatively, it may be implemented using a written document or via some other analog implementation. The Policy Manager 120 does not have to be exclusively machine or software-driven. In one embodiment, the Policy Manager 120 sends an email or other message to a human operator, who could respond with appropriate information or guidance. The Policy Manager 120 need not be deterministic; it need only evaluate a role change request according to some criteria and either take some action or return a response, as will be described in greater detail below.

Because the Decision System 100 may work at a different level of abstraction than the operators outside the System 100, the Policy Manager 120 acts as a translation layer between the logical processes and abstractions and usable representations within the Decision System 100. This translation has two aspects: first, the maintenance of policy representations, and second, the maintenance of instructions that describe how to act upon those policies in response to a request. For example, one policy might be the concept "don't allow people who write checks to sign checks." In one embodiment, the policy is stored as rows in two tables in a database, one designated "people who write checks" and the other designated "people who sign checks." The instructions which describe how to associate these two tables are implemented as a series of instructions triggered to run by the modification of any entry in either table.

In another embodiment, the information "people who write checks" and "people who sign checks" are lists written down on two sheets of paper. A standard procedure requires operator comparison of the two lists before approving any change to either list. Despite the use of a single constraint in the preceding examples, the Policy Manager 120 may evaluate policies having any number of constraints. For example, another embodiment uses computer constructs representing logical expressions, such as imperative or declarative statements, to store policy information. The rules governing those expressions are embedded within computer functions accessible to the policy manager; the functions are used to solve the system of equations, yielding a result.

The Decision System 100 is activated on the provision of a Decision Request 130 thereto. The Decision Request 130 may originate from any source, including, but not limited to, a person, a mechanical or electrical switch, or a hardware or software agent. The Decision Request 130 may be alone, or it may be part of a larger group of requests being executed as a result of an iterative, parallel, or recursive process.

Semantically, the Decision Request 130 may be a request for information, a request for the allowance or disallowance of some action, the association or disassociation of a policy, privilege, or identity from some other entity or group, a change in a role hierarchy, or any other action which might potentially take the system out of compliance.

The Decision Request 130 can be represented in various ways. In one embodiment, the Decision Request 130 is a string including such information as an identity specifier, an action specifier, and a series of data objects. Another embodiment uses a privilege matrix within a SQL database to represent relationships between privileges and identities; the Decision Request 130 is represented by a SQL string updating the privilege matrix.

In another embodiment, the Decision Request 130 is represented by a series of clicks and drags from a mouse in within a GUI environment. An on-screen visual box represents a role; the privileges and identities associated with that role are represented by icons within that box. Clicking and dragging icons into or out of that box constitutes a request to associate or disassociate the roles, privileges, and identities represented.

In another embodiment, the Decision Request 130 is represented by a button press, a function call, or a HTTP GET or POST to a certain page in a web application.

In a further embodiment, the Decision Request 130 is represented by a memo or email from an employee or subsidiary asking permission to engage in a certain course of conduct; for example, making a request to sell x shares of stock. Alternatively, the decision request could concern stopping an existing course of conduct; for example, a request to stop paying a newly-terminated employee.

Upon receiving the Decision Request 130, the Decision System 100 performs a Policy Evaluation 140 to determine which, if any, of a number of policies are relevant to the Decision Request 130. This process may also be referred to as policy location, or finding the applicable policy set. In one embodiment, in which the Decision Request 130 is an internal table lookup, the Policy Evaluation 140 may comprise a pointer to relevant policy expression(s) stored by the Policy Manager 120.

In another embodiment, multiple policies correspond to the Decision Request 130. For example, if the Decision Request 130 comprising a request to remove Bob Jones from role 'employee' is associated with policies that correspond to "remove Bob Jones' access from the employee's shared drive," "remove Bob Jones' pay," and "notify human resources to hire another programmer." The Policy Evaluation 140 examines the circumstances and may return more than one policy. Not all policies may be applicable or enforced at any given time; the Policy Evaluation 140 may return a list of all policies or only appropriate policies.

In an alternative embodiment, policy statements are aggregated into a single policy statement which may be interpreted by the Decision System 100. For example, assume an embodiment in which policies are represented as bit fields in memory. In this embodiment, the Policy Evaluation 140 is implemented as logical instructions, like "AND" or "XOR," across multiple bit fields. This creates a composite bit field representation of the compound policy expression. However, the exact details of such operations would not necessarily need to be known by the abstract processes evaluating the policies; as noted above, one function of the Policy Manager 120 is to translate between usable and abstract representations such that the operations carried out correctly reflect the abstract policy.

In another embodiment, all or portions of the Policy Evaluation 140 may be performed by an operator outside the system 100. For example, a manager terminating Bob Jones' employment may have the appropriate policies presented on the manager's computer screen. The manager then decides which policies to apply by clicking the appropriate checkboxes on the screen.

In an alternative embodiment, policies are grouped with the applicable roles and identities or associated with parts of a role hierarchy. The applicable policies are located by inspecting the hierarchy itself as well as the identity to be removed - policies associated with a descendant role may need to be applied if changes are made to an ascendant role. For example, assume an embodiment in which the administrators want to enforce the concept of least privilege by defining separate roles for each administrative task. To maintain necessary functionality, this embodiment maintains a policy that there exists at least one identity in each task-based role. Further assume all these roles have a common ascendant role, and an identity in the ascendant role is therefore able to perform all administrative tasks. A decision request affecting an identity in the ascendant role would need to take into account the policies associated with the descendant task-based roles. By examining the role hierarchy in response to the ascendant role change, the descendant policy requirements are located and integrated into the Policy Evaluation 140.

Implicit within the Policy Evaluation 140 discussed above is the gathering and consideration of applicable Policy Expressions 150 and Premises 160. For example, some of the Policy Expressions 150 used in the above examples might include "maintain one identity in each task-based role," "remove non-employee access to shared resources," "remove non-employee pay," and "maintain a full staffing level in the programming department." In general, a Policy Expression 150 can be anything that prescriptively or proscriptively puts a constraint upon the result of a Policy Evaluation 140. Any number of Policy Expressions 150 can be used in a Policy Evaluation 140.

By way of contrast, a Premise 160 is any other data that can be used as an input to a Policy Evaluation 140. For example, some of the Premises 160 used in the above examples might include, "Bob Jones was an employee," "Bob Jones has been terminated," "Today is the first day of the month," "Human Resources is responsible for hiring," etc. In general, a Premise 160 can be a representation of any fact. Premises can include both policy-specific information (for example, the identity of a person) and environmental information (for example, the time of day). Just like policy expressions, any number of premises can be used in a Policy Evaluation 140. No restriction on the type or content of policy expressions or premises is necessary. For example, a forecasting scenario might use false premises or expressions as part of the Policy Evaluation 140.

After taking into account all relevant policy expressions and premises, the result of the Policy Evaluation 140 is one or more Conclusions, represented in Fig. 1 by the label 170. These conclusions can vary in form, number, content, and type. In one exemplary embodiment, the conclusions are imperative in nature. For example, one embodiment uses a list of actions, possibly empty, which actions correspond to the abstract policies. An imperative Conclusion 170 may be as simple as an "allow" or "deny," but can also involve any other action expressible within the policy framework. For example, the conclusion may be "send an email to an administrator," "log this action," "make a change to another role," "sound an alarm," or any other action, including the action "do nothing." Further, an imperative conclusion may involve any number of these responses together, such as "log this action, deny, and sound an alarm." Another conclusion might call a function, access an outside system, change a data set, or follow a user-specified procedure.

Another embodiment has conclusions that are declarative. For example, one exemplary conclusion is an XML document, describing information associations and equivalencies. Another embodiment has conclusions represented by a result set. For example one conclusion is the empty set, indicating that a role list is empty, or that the range of objections is empty. Another conclusion is a one-dimensional yes or no response. Another conclusion is represented as tabular data, or linked sets of tabular data.

In another embodiment, the Conclusions 170 are only descriptive. In this embodiment the Conclusions 170 are represented by a document or documents, a record in a database, or a system snapshot. In another embodiment, Conclusions 170 are represented in a data record or by allowing current in certain parts of a digital or analog circuit. In general, the information within the Conclusions 170 will govern the form and content thereof No specific format or semantics are necessary.

The outward expression of the Conclusions 170 is a Decision Response 180. The Decision Response 180 differs from the Conclusions 170 in that the Decision Response may be communicated outside the Decision System 100 if appropriate; it represents the "answer" to the Decision Request 130. Just as the Conclusions 170 may vary in form, number, content, and type, so too can the associated Decision Response vary between embodiments and within an embodiment. For example, the Decision Response 180 can take all the forms described above for the Conclusions 170. Further, the Decision Response 180 can have more, less, or the same information as contained within the Conclusions 170 which give rise to the Decision Response 180. Further, the Decision Response 180 is not limited to the same form or information as the originating Conclusions 170. In general, the Decision Response 180 may be represented by anything capable of conveying the correct meaning.

Further, it is not necessary that the Decision Response 180 be oriented toward only one recipient. One embodiment, for example, has a singular decision response with portions of that response addressed any or all of the Policy Manager 120, the identity which initiated the Decision Request 130, and other components inside and outside the system. Each of these entities may receive either all of the response or only the pertinent portions. Further, there is no requirement that different parts of the Decision Response 180 be synchronous.

In another embodiment, the Decision Response 180 is implicit. For example, assume an implementation where a certain action is temporarily blocked, pending the outcome of the Decision Request 130; one implicit response would unblock the original request and allow it to go through. Depending on the embodiment, the Decision Response 180 may involve doing nothing, a single action, or a combination of actions.

Those skilled in the art will appreciate that the processes and embodiments described in association with Fig. 1 are just one way of implementing a decision system. None of the processes or embodiments heretofore described are necessary to the functioning of the invention; in fact, to an outside system, the entire process can be a "black box" into which decision requests are input and from which decision responses are read. The preceding descriptions are provided simply to show part of the range of systems to which the invention described below can apply.

As mentioned above, many systems in business can be generally described as "decision systems," functioning similarly or differently from the system described above. However, the difficulty with decision systems in general is that it is extremely difficult to get a conclusive and correct answer from these systems when they are applied to real-world problems. For example, assume an example in which an employee wants to sell 10,000 shares of stock. One decision system may evaluate premises and policies having to do with stock option vesting schedules and say "yes." Another decision system may evaluate stock retention rules and say "Only 5,000 can be sold." A third decision system may evaluate auditing requirements and require a record be made. A fourth decision system, controlled by a third party (such as the brokerage) may evaluate SEC blackout requirements and say "no." Another decision system might impose additional requirements based upon the position of or nonpublic knowledge held by the seller. For any decision of consequence in the business world, tens or even hundreds of decision systems may be consulted. The millions of possible interactions within the system guarantee that some combinations of inputs will lead to results which are out of compliance. Further, the distributed control of these systems (some systems may belong to third parties outside the business) make integration effectively impossible.

By way of comparison, a comparable explosion in complexity has occurred in the field of security. As the number of possible interactions with a computer has increased, it has become increasingly difficult for old-style Mandatory Access Control (MAC) and Discretionary Access Control (DAC) systems to keep pace. The result has been the development of a new security models, such as rules-based authorization, logic-based authorization, policy-based authorization, and Role-Based Access Control (RBAC) systems, in which the relationships between identities and permissions are easier to manage. RBAC associates permissions identities with "roles." A role can be regarded as a set of transactions that a user or set of users can perform within the context of an organization. Each role is granted only the minimum permissions necessary for the performance of the functions associated with that role. Users are assigned to roles, giving the users the permissions necessary to accomplish job functions. As a result, RBAC provides a means of naming and describing many-to-many relationships between individuals and rights. An individual may at any moment be able to act in several roles. When an individual has multiple role assignments, that individual is given the aggregated permissions of all roles to which that person belongs, subject always to separation of duties constraints. Therefore, the permission contours for each actor in a system can be unique without imposing excessive administrative overhead. Further, separation of duties can be enforced and audited on both a static and dynamic basis.

RBAC principles cannot be directly applied to compliance issues because of the different responses required by the different types of systems. Access control systems are designed to give essentially yes-no responses only; either a certain action is allowed or it is disallowed. Compliance systems need a much broader range of responses. Not only can something be "allowed" (compliant) or "disallowed" (not compliant) but it could also be only partially allowed, allowed with restrictions (such as reporting or logging requirements), transformed, deemed temporarily compliant, etc.

The system described below provides a mechanism whereby a superset of access control mechanisms and responses can be described and maintained. In one embodiment, both the decision systems and the users of those systems interact as different identities in what can be described as a "rule or role-based compliance control" (RRBCC) system. The system and user identities can be maintained in a logical and compliant relationship in response to decision requests without imposing excessive administrative overhead. Just as RBAC systems provide a grouping mechanism for identities and permissions, RRBCC systems provide a grouping mechanism for compliance controls and tests. In another embodiment, the system can be described as a "guaranteed-compliance decision system," in that the system state and the responses generated can be guaranteed to conform to administrator-defined or otherwise derived mandatory compliance expressions.

Turning now to Fig. 2, a Decision System is generally designated by a reference numeral 100A. The elements within the Decision System 100A, designated by reference numerals 110A through 170A, correspond to respective elements 110-170 of the Decision System 100 of Fig. 1. However, the use of the decision system illustrated in Fig. 1 is purely exemplary; any decision system could be substituted into Fig. 2 without loss of generality.

There is one essential difference between the Decision System 100 and the Decision System 100A; in the latter, a Decision Response is not communicated back at the end of the decision system's processing. Instead, conclusions of the Decision System 100A (including, possibly, what would be deemed a Decision Response) are communicated over an I/O channel 110A into a Compliance System 200. For purposes of further description of Fig. 2, these conclusions will be termed "intermediate" or "temporary" conclusions. The form, content, and type of these intermediate conclusions varies between embodiments; anything which can serve in a typical decision system as a Conclusion 170 or a Decision Response 180 can also serve as an intermediate conclusion.

Referring again to Fig. 2, just as with the Decision System 100A, the Compliance System 200 may comprise a single program or collection of programs on a computer, a special- or general-purpose computer with computing hardware, or a dispersed system such as a cluster or other computers on a network. The Compliance System 200 may be integrated with the Decision System 100A or it may be completely separate. For explanatory purposes only, this embodiment of a Compliance System 200 is housed in a system distinct from the Decision System 100A. In another embodiment, however, the two systems are implemented as separate processes on the same computer. In another embodiment, the Decision System 100A and the Compliance System 200 are intermingled, even sharing executable code blocks and a common memory space on a computer. The interactions between the systems would therefore take place via control-flow constructs in the code and shared data structures.

Communications within the Compliance System 200 and between the System 200 and other outside systems or components are handled by Input-Output (I/O) channels 210. The I/O channels 210 may be implemented in any way known in the art, and in particular may include any protocols, connections, or components described above in connection with the I/O channels 110 and 110A. The I/O channels 210 in Fig. 2 are shown as distinct from the I/O channels 110A only to show that in this embodiment, different channels are used within the Compliance System 200 than in the Decision System 100A. In another embodiment, however, some or all of the I/O channels are shared between the two systems.

The Compliance System 200 also comprises a Compliance Manager 220. The Compliance Manager 220 comprises one or more computing modules that facilitate the evaluation of system states, as will be described further below. These modules can be implemented in any way known in the art. In one embodiment, for example, a module is implemented in a hardware circuit comprising custom VLSI circuits, gate arrays, off-the-shelf semiconductors such as logic chips, transistors, and other discrete components. In another embodiment, a module is implemented in a programmable hardware device such as a field programmable gate array or programmable array logic device.

In another embodiment, these modules are implemented in software for execution by various types of processors. An identified module of executable code may, for instance, comprise one or more physical or logical blocks of computer instructions which may, for instance, be organized as an object, procedure, or function. Further, the executables of an identified module need not be physically located together, but may comprise disparate instructions stored in different locations which, when joined logically together, comprise the module and achieve the stated purpose for the module.

A "module" of executable code can be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

Similar to the Policy Managers 120 and 120A described above, the Compliance Manager 220 may need to translate between more or less abstract representations of system states. Accordingly, different technologies can be used to provide or enhance the functioning of the module. For example, one embodiment uses an object or relational database to assist in compliance evaluation. Another embodiment uses a decision tree or a neural network. A further embodiment uses a rules engine, expert system, or other compiled or interpreted code. Additionally, part of the Compliance Manager 220 may not be machine or software-driven; in one embodiment, the Compliance Manager 220 sends an email or other message to a human operator, who responds with appropriate information or guidance.

The first responsibility of the Compliance Manager 220 is to engage in a Compliance Evaluation 230. In one embodiment, the Compliance Evaluation 230 can be considered a meta-policy evaluation, and as such the Compliance Manager 220 may use the Policy Expressions 150A and Premises 160A in performing its evaluation. However, the Compliance Evaluation 230 is not duplicative of the Policy Evaluation 140A. In particular, the Compliance Evaluation 230 may take into account other Premises 240 and administrator-defined or derived Compliance Expressions 250.

The Premises 240, like the Premises 160 and 160A discussed above, may be a representation of any fact. In one embodiment, the Premises 240 are at times a subset, superset, or exactly the same as the Premises 160A. Many embodiments, however, include two additional facts in the Premises 240 which are not available at the time the Premises 160A are gathered: first, the intermediate conclusions provided by the Decision System 100A, and second, the effect those conclusions will have on the system state as a whole. Other embodiments include information and facts which are not relevant to the Decision System 100A, but which are relevant to the interactions between the Decision System and other systems. The inclusion of these additional premises allows the Compliance Evaluation 230 to have a broader scope than the Policy Evaluation 140.

The representation of the Premises 240 varies between embodiments. In one embodiment, these premises are represented as rules or expressions in formal logic. In another embodiment, these premises are represented by rows in a database, or by linked tables in a database. A third embodiment represents the premises as graph transformations or transitions from one state to another. A fourth embodiment uses rules expressed in a declarative statement, such as a SAML or similar XML document. Further embodiments may use custom binary or text formats or rules expressed as imperatives. Another embodiment uses predicted or recorded past, present, and/or future states. Another exemplary embodiment uses stored weight calculations to represent different premises. Another embodiment uses multiple formats to store, access, and manipulate premises; as noted above, one responsibility of the Compliance Manager 220 is to translate these premises as necessary into a form usable by the system.

The Compliance Expressions 250 are distinguished from the Policy Expressions 150 and 150A in that the Policy Expressions are an expression of a prescriptive or proscriptive constraint upon the outcome of a Decision Request; the Compliance Expressions 250 are an expression of a prescriptive, proscriptive, or preferential constraint upon the system as a whole and the conforming system states. These constraints may be administrator-defined or they may be derived from other constraints or preferences. For example, one embodiment uses formal logical expressions to describe conforming system states; the Compliance Manager 220 or another module within the Compliance System 200 expands each expression out to include all possible corollaries, thus deriving rules for finding allowed and disallowed states. Derived expressions need not be derived from administrator-defined expressions, however. In another embodiment, the profitability of previous system states is recorded and a preference for profitable system states is thus derived.

Returning to the Compliance Evaluation 230, the Premises 240 and Compliance Expressions 250 are used to evaluate the whole-system state for compliance. Because of the possible increased complexity of the Premises 240 and the Compliance Expressions 250, the implementation of the Compliance Evaluation 230 varies considerably between embodiments. Different factors can affect the implementation in any one embodiment. For example, confining a system to discrete states makes state analysis relatively simple. Other systems which allow multivalued or continuously-varying states may need to use fuzzy logic, probabilistic or genetic systems to perform an acceptable evaluation.

In one embodiment, for example, the allowed system configurations are described in the context of a role-based system with discrete states. Because of the constrained nature of the system, whole-system state analysis is used to positively identify allowed and disallowed states. The role hierarchy can be positively traversed and verified compliant. Another embodiment uses both proscribed and prescribed states, and multiple passes across the system are used to ensure that all constraints are fulfilled.

For more complex evaluations, the Compliance Evaluation 230 is not limited to the simple evaluation methods described above. For example, assume an embodiment which represents possible system states as traversals within a graph. Prohibitions are expressed by removing state connections within the graph; prescriptions are represented by making certain graph edges directed. Finally, preferences are expressed by giving graph edges traversal weights. The total number of system states may be too large for a traditional graph-analysis algorithm to prove effective and the addition of preferences can make the finding of an optimal solution (a solution which is both conforming and maximally preferable according to the various expressed preferences) NP-complete. However, this problem can be treated as a type of "Traveling Salesman" problem and various evolutionary and genetic algorithms can be used to find relatively preferable conforming solutions within acceptable time and space constraints.

For some situations, a conforming solution may not be evident upon first analysis. In these situations, some embodiments allow for the consultation of a human operator. In one embodiment, the premises and tentative conclusions (if any) are displayed to a human operator. The operator then has the option to terminate processing, to provide a solution, to select one of the tentative solutions provided, or otherwise alter the system state in a way which allows the Compliance Evaluation 230 to complete. In a further embodiment, the input of the human operator is stored as a possible solution to a future similar circumstance.

The result of the Compliance Evaluation 230 is zero or more Compliance Statements 260, represented in Fig. 2 by the shape 260. If the proposed result of the Decision Request conforms to the Compliance Expressions 250, there may be no additional Compliance Statements 260. In one embodiment, the original intermediate conclusion is then promoted to a final conclusion and a Decision Response 270, corresponding to the Decision Response 180 of Fig. 1, is generated. In many situations, however, the intermediate conclusions require that one or more Compliance Statements 260 be executed.

The Compliance Statements 260 vary considerably between embodiments depending on system type, request type, the exact nonconformity, etc. They can be imperative or declarative. For example, one embodiment uses the Compliance Statements to generate a compliance record that states that the intermediate result set is compliant or non-compliant, possibly including details of the compliant or non-compliant state. Another embodiment changes data in the intermediate conclusions (by addition, subtraction or other modification) to make them temporarily compliant. This has the advantage of not forcing a permanent new state in the result set for a condition that is temporary. Another embodiment changes data in the conclusions to make them permanently compliant. A further embodiment may stop, deny, or reorder the evaluation of one or more policy expressions.

Other embodiments may reach back and modify the premises or policy expressions used in the Decision System 100A. For example, one embodiment changes role or set memberships. Another embodiment changes access control factors. Other embodiments can change, temporarily or permanently, premise values including strings, integers, XML expressions, assignments, etc.

In one example embodiment, the decision system creates a list of roles into which a person must be admitted and the Compliance Evaluation 230 determines that the list is insufficient to meet administrative, regulatory, or other guidelines. In this embodiment, the Compliance Statements 260 expand the list of roles to which that person must be admitted to include roles which guarantee compliance with the guidelines.

Further embodiments may involve one or more human operators in the decision flow. For example, one embodiment initiates a work flow which allows a human decision maker to evaluate the conditions or take action to make the result set compliant.

Finally, an embodiment may use as many of these strategies as is appropriate to handle the system state. For example, one embodiment produces Compliance Statements which generate a noncompliance record, modify the original request, change appropriate values in the premises, and consult a human operator in response to a single Compliance Evaluation 230.

It is important to note that the control flow within the system may follow different paths. In one embodiment, as represented by an arrow 190, a Decision Response 270 is produced immediately after the execution of the Compliance Statements 260. For example, the execution of the Compliance Statements 260 themselves may be all that is needed to make the Decision Response compliant. In other embodiments, the control may "loop back" to an earlier stage in the processing of the request. For example, in one embodiment, as represented by an arrow 192, the System 200 performs another Compliance Evaluation 230 after the execution of the Compliance Statements 260. In another embodiment, as represented by an arrow 94, another Policy Evaluation 140A is performed after the execution of the Compliance Statements. It is not necessary for an embodiment to always follow the same control flow procedure; the same embodiment may follow the control flow represented by arrows 190, 192, and 94, depending upon the circumstance. Further, an embodiment may "loop back" as many times as is necessary to achieve a compliant result. In one embodiment, for example, multiple loops back are used to refine a data set or produce a more optimal Decision Response 270.

To better understand Fig. 2, it is instructive to consider it in the light of a simple example. For example, assume an embodiment in which the Decision System 100A contains a default Policy Expression 150A, which, expressed in English, is "if an identity is removed from the role 'employee,' send an email to the system administrator." Further assume the existence of the Policy Expression 150A "do not send email to employees on vacation." Finally, assume the existence of the Premises 160A, "the system administrator is on vacation," and "an employee has been terminated" (removing the employee from the applicable role). In this situation, the Decision System engages in Policy Evaluation 140A. Noting the applicable policies and premises, the Decision System comes to the Conclusion 170A "do nothing."

At this point, the Compliance System 200 steps in. Assume that this embodiment contains a Compliance Expression 250 corresponding to "all transactions must be auditable." Further assume that the Premises 240 include the proposed Conclusion "do nothing," the statement "an email satisfies the auditability requirement" and the premises previously stated. The result of the Compliance Evaluation 230 is the recognition that the intermediate conclusion "do nothing" would put the system as a whole into a non-compliant state. As a result, one or more Compliance Statements 260 are executed.

In one embodiment, the execution of the Compliance Statement 260 sends an email to the System Administrator, effectively overriding the nonconforming policy statement. The "original" Decision Response 270 is then issued, because the execution of the Compliance Statement 260 has brought the system into compliance.

In another embodiment, the Compliance Statement 260 creates a new Compliance Expression 250 such as "appoint an acting system administrator." Control then returns to the Compliance Evaluation 230 engine, which initiates a work flow to appoint a new system administrator. At the end of this work flow, however, the result is still not compliant; even though there is a new system administrator, allowing the action to go forward without further processing would still not conform to the auditability requirements. Therefore, a Compliance Statement 260 is issued which directs the Decision System 100A to engage in another Policy Evaluation 140A. The result of this new evaluation is the Conclusion "send an email to the system administrator", which is a compliant result. The Compliance Evaluation 230 then succeeds and a Decision Response 270 is produced.

In yet another embodiment, the effect of the Compliance Statements 260 is to create a new temporary policy statement "send an email to the assistant system administrator." Control is then routed back to the Decision System 100A, which engages in a new Policy Evaluation 140A. The result of this temporary policy change is the new intermediate conclusion "send an email to the assistant system administrator." This intermediate conclusion is then subjected to a Compliance Evaluation 230. Because this conclusion allows a compliant system state, no Compliance Statements 260 need issue; the Compliance System 200 produces a Decision Response 270 incorporating the new conclusion.

Although this example only uses a limited number of policies, compliance expressions, and premises, the Compliance Evaluation 230 may encompass an arbitrary number of policies, compliance expressions, and premises. Similarly, the Compliance System 200 as a whole and any part thereof may use as many premises and iterations as is necessary to arrive at a compliant and preferable result.

Each of Figs. 3A-3C depicts one of three exemplary embodiments of a chained compliance system. Those skilled in the art will note that the output of a guaranteed-compliance decision system is a Decision Response, just like the output of a regular decision system. As a result, compliance systems can be chained to produce results that are compliant upon many dimensions.

Fig. 3A depicts a first chained compliance system, designated by a reference numeral 300. In the system 300, a Decision System 300A is connected to a Compliance System 300B in a manner similar to that described in Fig. 2. In turn, the two Systems 300A and 300B are connected to a Compliance System 300C. The Compliance System 300C may or may not know that the previous system in the chain is a compliance system; to System 300C, the joint system comprising the Systems 300A and 300B just looks like a decision system. As a result, additional compliance systems could be chained to an arbitrary degree.

For example, one embodiment uses separate compliance systems to evaluate the results of hiring an employee. One compliance system monitors conformance with immigration procedures; another grants access to appropriate system resources; a third sets up payroll for the new employee. One advantage of this particular embodiment is that the administrator of each system is allowed to dictate what constitutes "compliance" for a particular set of constraints. To the legal department, a "compliant" hiring means that the necessary government paperwork is filed. To the IT department, a "compliant" hiring means that appropriate system access has been granted and logged. To the human resources department, a "compliant" hiring means that the payroll has been updated with the new information, etc.

Another advantage of this particular embodiment is that, if needed, different compliance systems can be provided by different organizations. For example, assume an embodiment in which the payroll function is outsourced to another company. The chained compliance system can still function, despite the lines drawn by administrative responsibility and ownership. For example, in an embodiment in which multiple compliance systems are used to guarantee conformance with SEC guidelines for the sale of stock, a SEC blackout requirement based upon mandatory "blackout periods" is enforced from outside a company, at the brokerage level. Other blackouts based upon the possession of material nonpublic information are imposed from within the company.

Fig. 3B depicts a second chained compliance system, designated by a reference numeral 310. In the system 310, multiple Decision Systems 310A, 310B, are serviced by a single Compliance System 310C. For example, recall the previous example of the outsourced payroll function. The same compliance system can be used to service many different clients. For example, another embodiment in a stock brokerage uses a compliance system to guarantee compliance with SEC requirements governing the sale of stock. In this embodiment, multiple participating companies each contain a decision system (equivalent in this embodiment to the Systems 310A and 310B). These decision systems (which themselves may be chained compliance systems) govern whether a particular employee has shares eligible to sell. The Compliance System 310C controlled by the brokerage evaluates whether the selling the shares conforms to SEC blackout requirements.

Fig. 3C depicts a third chained compliance system, designated by a reference numeral 320. In the system 320, a Decision System 320A and multiple Compliance Systems 320B, 320C, and 320D are all part of a larger compliance hierarchy. Just as role-based systems simplify access control by grouping identities and permissions, this hierarchy groups compliance expressions defined across the hierarchy, including, for example, actions, system states, and "duties". In the system 320, the different branches of the system comprise a role-based compliance control system. The different parts of the hierarchy bear a defined relationship to each other, and duties imposed upon the ascendants or descendants of a particular node can affect compliance evaluations at that node. Further, these duties can be imposed across a strict hierarchy or in a more general graph of compliance nodes.

For example, assume an embodiment in which the administrators want to enforce the concept of least privilege by defining a separate role for each administrative task. To maintain necessary functionality, this embodiment has one Compliance System 320B which maintains a compliance expression mandating that there exist at least one identity in each task-based role. Further assume that there exists other compliance systems which govern another unrelated compliance areas (Systems 320C and 320D). When a decision request comes to remove an identity from an associated role, the duty hierarchy is examined for applicable compliance expressions via a local traversal. The duty imposed by the System 320B can be imposed across the Systems 320A, 320C, and 320D without those systems being in a direct "reporting" relationship. One advantage of this embodiment is that it allows a more flexible, understandable, and administrator-friendly definition of duties and compliance expressions defined across the hierarchy without sacrificing guaranteed compliance.

Despite the relatively simple chained systems illustrated in Figs. 3A-3C, an embodiment may nest the described systems to an arbitrary degree. Further, an embodiment may mix any or all of the described chaining methods within a single larger system.

While the preceding description shows and describes one or more embodiments, it will be understood by those skilled in the art that various changes in form and detail may be made therein without departing from the scope of the present disclosure. For example, various steps of the described methods may be executed in a different order or executed sequentially, combined, further divided, replaced with alternate steps, or removed entirely. In addition, various functions illustrated in the methods or described elsewhere in the disclosure may be combined to provide additional and/or alternate functions.

## Claims

1. A system for conforming a decision to a compliance expression, the system comprising:
a decision system (300A, 310A, 320A) for performing a policy evaluation (140) responsive to a decision request (130) based on at least one of a premise (160) and a policy expression (150), wherein the result of the performing a policy evaluation comprises an intermediate conclusion (170); and
a first compliance system (300B, 310C, 320B) for:
performing a compliance evaluation (230) to determine conformance of the intermediate conclusion with a compliance expression (250);
responsive to the performing a compliance evaluation, selectively executing a compliance statement (260) in connection with the intermediate conclusion; and
subsequent to the selectively executing, issuing a decision response (270), wherein the decision response conforms to the compliance expression (250).

2. The system as recited in claim 1, wherein the compliance expression (250) comprises at least one of an administrator-defined expression and a derived expression.

3. The system as recited in claim 1, wherein the compliance expression (250) comprises at least one of an allowed system state description, a disallowed system state description, and a preferred system state description.

4. The system as recited in claim 1, wherein the first compliance system comprises a compliance manager module (220) including a compliance evaluation module (230).

5. The system as recited in claim 1, further comprising a compliance statement (260) module, the compliance statement module comprising at least one module for at least one of producing a decision response (270), performing a compliance evaluation (230), returning control to the decision system (300A), adding a premise (160), removing a premise (160), transforming a premise (160), adding a policy expression (150) to the decision system, adding a compliance expression (250), removing a policy expression (150) in the decision system, removing a compliance expression (250), transforming a policy expression (150) in the decision system, transforming a compliance expression (250), creating a decision request (130), removing a decision request (130), transforming a decision request (130), allowing an action, denying an action, transforming an action, formulating a command, reporting a status, creating a record, executing a function, calling an external system, performing a procedure, and following a user-specified procedure.

6. The system as recited in claim 1, further comprising a module for producing a decision response (270).

7. The system as recited in claim 1, further comprising a second compliance system (300C) connected to receive the decision response issued from the first compliance system (300B).

8. The system as recited in claim 7, wherein the relationship between the first compliance system and the second compliance system is described by one of a hierarchy (320), graph, group, and a role.
